Europäisches Patentamt

European Patent Office

Office européen des brevets

(19)

(11) **EP 1 568 573 A1**

(12) **EUROPÄISCHE PATENTANMELDUNG**

(43) Veröffentlichungstag:
    **31.08.2005 Patentblatt 2005/35**

(51) Int Cl.⁷: **B62D 5/04**

(21) Anmeldenummer: **05001512.2**

(22) Anmeldetag: **26.01.2005**

(84) Benannte Vertragsstaaten:
    **AT BE BG CH CY CZ DE DK EE ES FI FR GB GR
    HU IE IS IT LI LT LU MC NL PL PT RO SE SI SK TR**
    Benannte Erstreckungsstaaten:
    **AL BA HR LV MK YU**

(30) Priorität: **28.02.2004 DE 102004009820**

(71) Anmelder: **ZF Lenksysteme GmbH
    73527 Schwäbisch Gmünd (DE)**

(72) Erfinder: **Reinelt, Wolfgang
    70374 Stuttgart (DE)**

(54) **Verfahren zum Betrieb eines Lenksystems**

(57)     Die Erfindung betrifft ein Verfahren zum Betrieb eines Lenksystems für ein Kraftfahrzeug mit wenigstens einem lenkbaren Rad, wobei eine durch den Fahrer des Kraftfahrzeugs initiierte Lenkbewegung und/oder weitere fahrzeugspezifische Parameter als Eingabedaten von einem Steuergerät empfangen werden und daraus ein Steuersignal zur Erzeugung der Lenkbewegung des lenkbaren Rades, insbesondere zur Realisierung von Nutzanwendungen, ermittelt wird. Ein Sicherheitsüberwachungsverfahren des Lenksystems durch eine Überwachung der Eingabedaten des Steuergeräts mittels Sicherheitsfunktionen ist vorgesehen, wobei das Sicherheitsüberwachungsverfahren in mehrere Schichten gegliedert ist, welche die Eingabedaten des Steuergeräts auf ihre Plausibilität überprüfen und anhand der Ergebnisse die Nutzanwendungen des Lenksystems konfigurieren.

Fig. 4

**Beschreibung**

Die Erfindung betrifft ein Verfahren zum Betrieb eines Lenksystems gemäß dem Oberbegriff von Anspruch 1.

Ein gattungsgemäßes Verfahren ist aus der DE 197 51 125 A1 bekannt. Dabei werden die vom Fahrer durch ein Lenkrad aufgebrachten Lenkbewegungen, der durch einen Sensor erfasste Lenkradwinkel, mittels eines Überlagerungsgetriebes mit den Bewegungen des Stellantriebes, dem Motorwinkel, überlagert. Die so entstandene überlagerte Bewegung wird über das Lenkgetriebe bzw. das Lenkgestänge an die lenkbar ausgelegten Räder zur Einstellung des Lenkwinkels weitergeleitet. Hierbei ist der Stellantrieb als Elektromotor ausgelegt. Das Funktionsprinzip bzw. die Nutzanwendungen eines solchen Servolenksystems bestehen insbesondere darin, dass die Lenkung durch die Übersetzung des Überlagerungsgetriebes indirekt ausgeführt werden kann und damit geringe Lenkradmomente erreicht werden können. Dadurch bedingte, sehr große Lenkradwinkel werden vermieden, indem geeignete Motorwinkel überlagert werden, so dass mit Lenkradwinkeln üblicher Größe erforderliche Ausgangswinkel eingestellt werden können. Der zur Lenkunterstützung erforderliche Motorwinkel bzw. sein Sollwert wird aus dem Lenkradwinkel bestimmt. Darüber hinaus kann der Motorwinkel auch abhängig sein von Signalen, welche die durch Sensoren und/oder andere Fahrzeugsysteme, wie z. B. ein elektronisches Stabilitätsprogramm (ESP), erfassten Fahrzeugbewegungen repräsentieren. Dies erfolgt durch ein Steuergerät, auf welchem die für die Bestimmung der erforderlichen Motorwinkel bzw. die für die Steuerung der Nutzanwendungen erforderlichen Programme ausgeführt werden.

Aufgrund der Sicherheitsanforderungen an ein derartiges Lenksystem, ist ein Sicherheitskonzept mit Sicherheits- und Diagnosefunktionen, insbesondere um zufällige Fehler in der Sensorik, dem Steuergerät selbst oder der Aktuatorik zu entdecken und geeignet zu reagieren, d. h. beispielsweise die Nutzanwendungen, insbesondere die variable Lenkübersetzung geeignet zu schalten und/oder entsprechende Ersatzmaßnahmen zu starten, unerlässlich. Die Eingangssignale des Steuergeräts werden auf Plausibilität geprüft. Beispielsweise wäre es nachteilig ein verfälschtes Geschwindigkeitssignal zu akzeptieren, da die variable Lenkübersetzung u. a. geschwindigkeitsabhängig variiert wird.

Dazu ist es bekannt, die Sicherheitsfunktionen mit Prioritäten zu versehen und den Ersatzmaßnahmen matrixartig gegenüberzustellen. Dies wird programmtechnisch in der Regel mittels einer Statusmaschine (state machine) und eines Error-Handlers realisiert. Jedoch kann diese Statusmaschine aufgrund der Vielzahl verschiedener Sicherheitsfunktionen, Ersatzmaßnahmen und Prioritäten sehr komplex werden, was ein Testen bzw. Verifizieren der Statusmaschine hinsichtlich Korrektheit der Ersatzmaßnahmen und möglichem Blockieren erschwert. Des weiteren sind die Diagnosefunktionen deutlich eingeschränkt.

Der vorliegenden Erfindung liegt daher die Aufgabe zugrunde, ein Verfahren zum Betrieb eines Lenksystems, der eingangs erwähnten Art zu schaffen, welches die Nachteile des Standes der Technik vermeidet, insbesondere leicht verifizierbare bzw. zu testende Sicherheitsüberwachungsroutinen des Lenksystems bereitstellt, bei welchem detektierte Fehler des Lenksystems leicht diagnostiziert werden können.

Erfindungsgemäß wird diese Aufgabe durch den kennzeichnenden Teil von Anspruch 1 gelöst.

Durch diese Maßnahmen wird das erfindungsgemäße Verfahren zum Betrieb eines Lenksystems in vorteilhafter Weise um ein Sicherheitsüberwachungsverfahren erweitert, welches die Plausibilität der Eingabedaten des Steuergeräts mittels geeigneter Sicherheitsfunktionen überwacht und aufgrund der Überwachung die Nutzanwendungen (z. B. eine variable Lenkübersetzung) konfiguriert. Das Sicherheitsüberwachungsverfahren ist modulartig in mehrere Schichten aufgeteilt, die die einzelnen Gruppen von Sicherheitsfunktionen realisieren. Dadurch sind einzelne Routinen austauschbar, ohne das die über-/untergeordneten Schichten - definierte Schnittstellen zwischen den Schichten vorausgesetzt - betroffen sind. Des weiteren sind die einzelnen Schichten, welche in der Regel durch Statusmaschinen implementiert werden, einfacher verifizier- bzw. testbar. Darüber hinaus können auftretende Fehler in den einzelnen Schichten einfacher und schneller diagnostiziert werden.

Vorteilhaft ist es, wenn eine Schicht als E/E/PES-Überwachungsschicht (E/E/PES bedeutet elektrisch / elektronisches / programmierbares elektronisches System) ausgebildet ist, welche Sicherheitsfunktionen, insbesondere zur Überwachung

- der Hardware, insbesondere des Steuergeräts, der Sensoren und der Aktuatoren des Lenksystems,
- der Plausibilität der im Rahmen der Eingabedaten des Steuergeräts eingehenden Signale und
- des Programmablaufs auf dem Steuergerät,

ausführt.

Dadurch werden die hardwarenahen Sicherheitsfunktionen in einer separaten Schicht ausgeführt, welche die Grundfunktionalität des elektrisch/elektronischen/programmierbar elektronischen Systems (E/E/PES) überwacht.

Erfindungsgemäß kann ferner vorgesehen sein, dass eine Schicht als Anwendungsüberwachungsschicht ausgebildet ist, welche anwendungsbezogene Sicherheitsfunktionen ausführt.

Durch diese Maßnahme werden die anwendungsbezogenen Sicherheitsfunktionen ebenfalls getrennt überwacht.

Von Vorteil ist, wenn die Nutzanwendungen und/oder die E/E/PES-Überwachungsschicht und/oder die Anwendungsüberwachungsschicht wenigstens teilweise redundant ausgeführt werden.

Dadurch wird eine zusätzliche Sicherheit gewährleistet. Eine Vergleichsschicht kann eingeführt werden die diese redundanten Ergebnisse überprüft.

In einer verfahrensmäßigen Ausgestaltung der Erfindung, kann vorgesehen sein, dass eine Schicht als Signalschicht ausgebildet ist, welche einen Signalstatus des Lenksystems bestimmt, wobei die Signalschicht als Eingabe die Ergebnisse der E/E/PES-Überwachungsschicht und der Anwendungsüberwachungsschicht erhält.

Somit erhält die Signalschicht in vorteilhafter Weise über definierte Schnittstellen die Ergebnisse der E/E/PES-Überwachungsschicht und der Anwendungsüberwachungsschicht und kann dadurch den Signalstatus des Lenksystems bestimmen und diesen an die übergeordneten Schichten weitergeben. Von einem Austausch der Sicherheitsfunktionen in den unteren Schichten ist die Signalschicht nicht betroffen.

Darüber hinaus kann die Signalschicht als sogenannte Symptomschicht auch die Ergebnisse der Vergleichsschicht erhalten und in die Ermittlung des Signalstatus miteinbeziehen.

Vorteilhaft ist es, wenn eine Schicht als Systemstatusschicht ausgebildet ist, welche einen Systemstatus des Lenksystems bestimmt, wobei die Systemstatusschicht als Eingabe die Ergebnisse der Signalschicht, der Vergleichsschicht und der Anwendungsüberwachungsschicht erhält. Vorteilhaft ist es außerdem, wenn eine Schicht als Anwendungskonfigurationsschicht ausgebildet ist, welche die Nutzanwendungen aufgrund des durch die Systemstatusschicht errechneten Systemstatus des Lenksystems und/oder der Ergebnisse der Signalschicht bestimmt.

Dadurch kann ein Gesamtstatus des Lenksystems bestimmt und die Nutzanwendungen entsprechend geschaltet werden. Falls beispielsweise keine verlässlichen Daten hinsichtlich der Geschwindigkeit des Kraftfahrzeugs existieren müssen geeignete Ersatzmodi für die variable Lenkübersetzung geschaltet werden. Da insbesondere bei höheren Geschwindigkeiten eine zu direkte Lenkübersetzung gefährlich sein kann (z. B. Autobahnfahrt).

Vorteilhafte Weiterbildungen und Ausgestaltungen der Erfindung ergeben sich aus den weiteren Unteransprüchen. Nachfolgend ist anhand der Zeichnung ein Ausführungsbeispiel der Erfindung prinzipmäßig dargestellt.

Es zeigen:

Fig. 1 und 2   ein Schema des Lenksystems nach dem Stand der Technik, von dem die Erfindung im Ausführungsbeispiel ausgeht;

Fig. 3   ein Schema einer Schichtstruktur eines Sicherheitsüberwachungsverfahrens des erfindungsgemäßen Verfahrens;

Fig. 4   eine schematische Darstellung des Zusammenhangs zwischen Sicherheitsfunktionen und Nutzanwendungen des erfindungsgemäßen Verfahrens; und

Fig. 5   ein Schema eines teilweise redundanten Sicherheitskonzepts.

Im folgenden soll die Erfindung anhand eines Ausführungsbeispiels dargestellt werden. Dabei wird beispielhaft von einer eingangs erwähnten Überlagerungslenkung ausgegangen. Die Erfindung ist selbstverständlich auch bei anderen Lenksystemen, wie z. B. Steer by Wire, etc., einsetzbar.

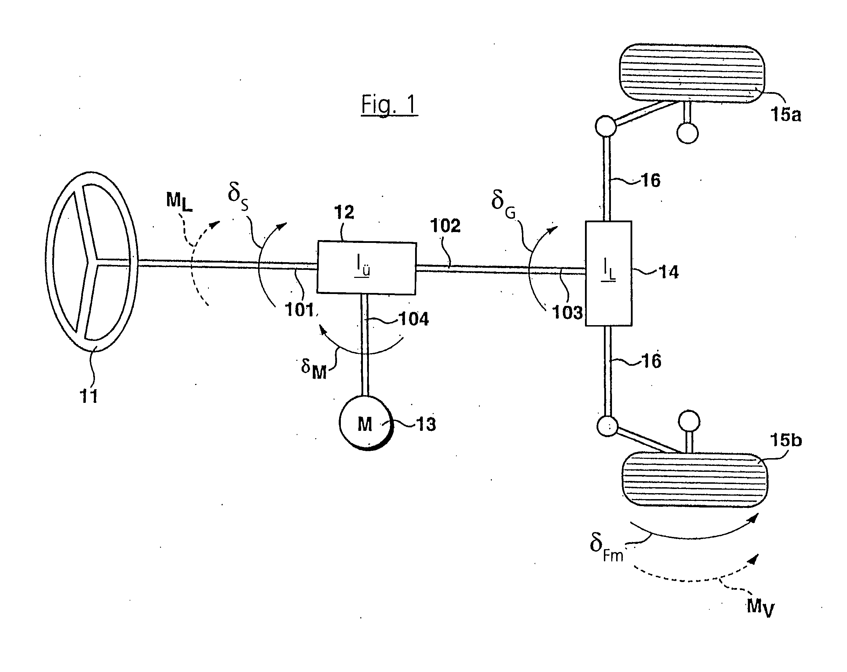

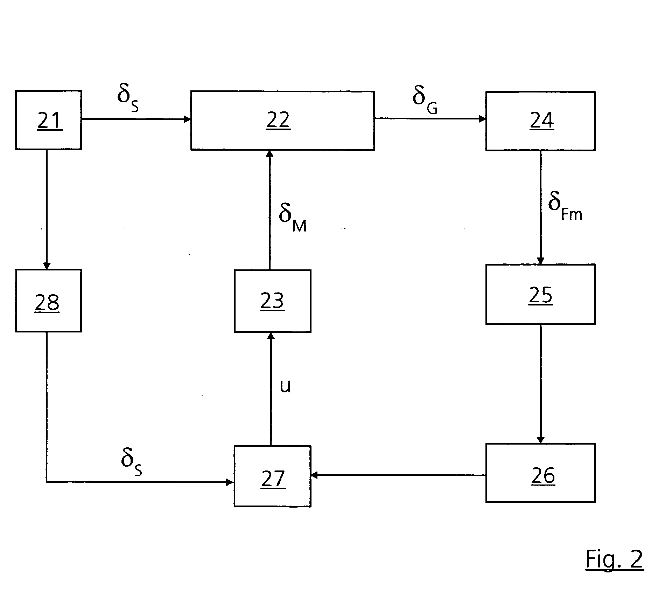

Die Fig. 1 bzw. Fig. 2 zeigt mit den Bezugszeichen 11 bzw. 21 ein von dem Fahrer des Fahrzeugs betätigbares Lenkrad. Durch die Betätigung des Lenkrades 11 bzw. 21 wird einem Überlagerungsgetriebe 12 bzw. 22 über eine Verbindung 101 ein Lenkradwinkel $\delta_S$ zugeführt. Gleichzeitig wird dem Überlagerungsgetriebe 12 bzw. 22 über eine Verbindung 104 ein Motorwinkel $\delta_M$ eines Stellantriebes 13 bzw. 23 zugeleitet, wobei der Stellantrieb als Elektromotor ausgebildet sein kann. Ausgangsseitig des Überlagerungsgetriebes 12 bzw. 22 wird eine überlagerte Bewegung bzw. ein Ritzelwinkel $\delta_G$ über eine Verbindung 102, 103 einem Lenkgetriebe 14 bzw. 24 zugeführt, das wiederum über ein Lenkgestänge 16 entsprechend der überlagerten Bewegung bzw. dem Gesamtwinkel $\delta_G$ lenkbare Räder 15a und 15b mit einem Lenkwinkel $\delta_{Fm}$ beaufschlagt. Die mechanische Übersetzung des Überlagerungsgetriebes 12 bzw. 22 für $\delta_M = 0$ ist mit $i_{\ddot{U}} = \delta_G/\delta_S$ und die mechanische Übersetzung des Lenkgetriebes 14 bzw. 24 mit dem Bezugszeichen $i_L$ bezeichnet.

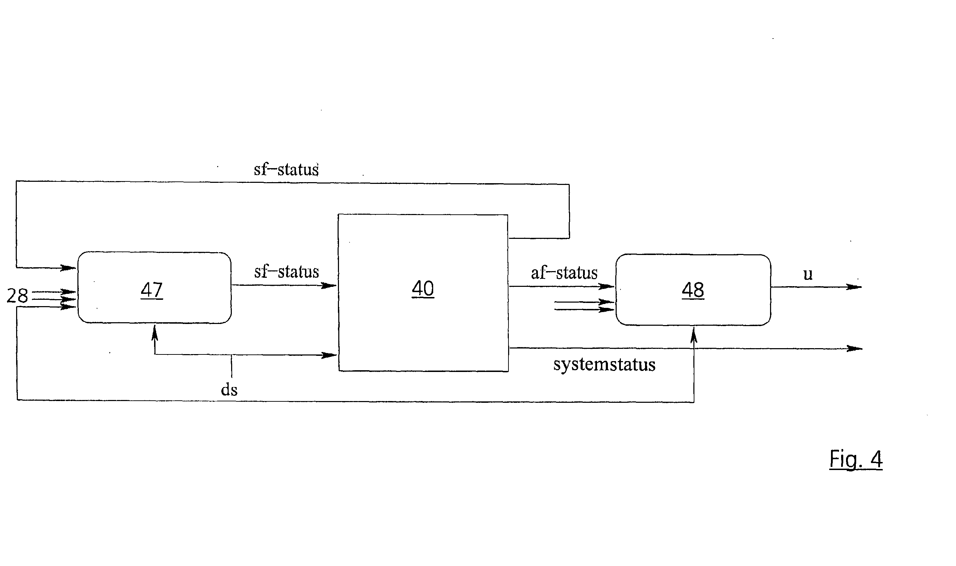

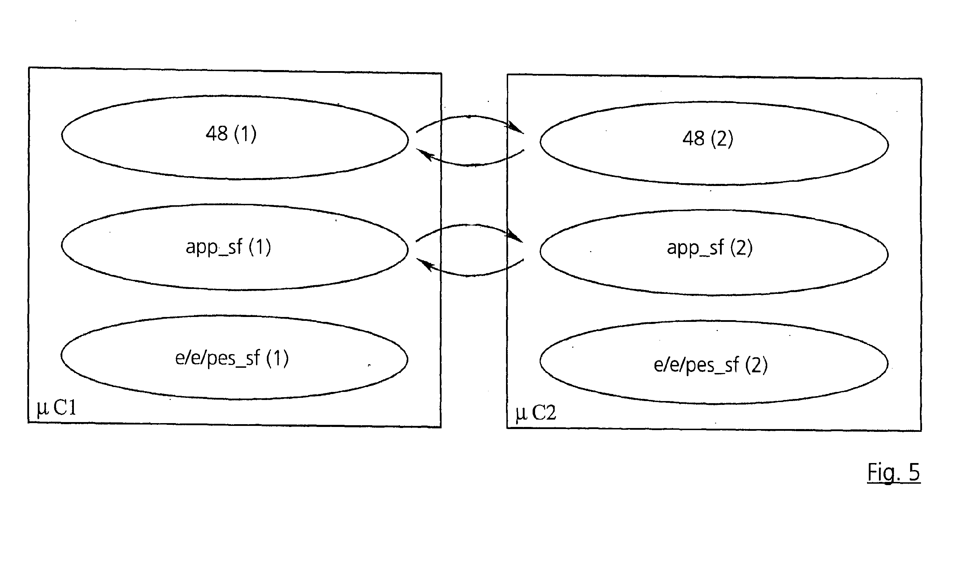

Auf die lenkbar ausgelegten Räder 15a und 15b wirkt ein von der Straße beeinflusstes Reaktionsmoment $M_V$. In der Fig. 2 sind weiterhin Sensoren 26 und 28 zu sehen, wobei der Sensor 28 den Lenkradwinkel $\delta_S$ detektiert und einem Steuergerät 27 zuführt, während mit dem Bezugszeichen 26 Sensoren gekennzeichnet sind, die Bewegungen 25 des Fahrzeugs (bspw. Gierbewegungen, Querbeschleunigung, Raddrehzahlen, Fahrzeuggeschwindigkeit usw.) und den Ritzelwinkel $\delta_G$ detektieren und entsprechende Signale dem Steuergerät 27 zuführen. Das Steuergerät 27 ermittelt, abhängig vom erfassten Lenkradwinkel $\delta_S$ und ggf. abhängig von den Fahrzeugbewegungen 25 eine Stellgröße u zur Ansteuerung des Stellantriebs 13 bzw. 23 zur Realisierung von Nutzanwendungen 48 (z. B. variable Lenkübersetzung - siehe Fig. 4 und 5). Die Signale der Sensoren 26 können auch einem CAN-Bussystem des Fahrzeugs entnommen werden.

Zwischen den in den Fig. 1 bzw. 2 dargestellten Winkeln und Drehmomenten gelten die bekannten Zusammenhänge ($i_L$ ist eine nichtlineare Funktion):

$$i_L(\delta_{Fm}) = [\delta_S/i_{\ddot{U}} + \delta_M] \qquad (1)$$

und

$$M_L = M_V/(i_L * i_{\ddot{U}}) \qquad (2)$$

Eine Servolenkfunktion wird durch das in den Fig. 1 und 2 gezeigte Lenksystem dadurch erreicht, dass durch eine große Gesamtübersetzung ($i_L * i_{\ddot{U}}$), d. h. durch eine sehr indirekte Lenkung, das Lenkradmoment $M_L$ reduziert wird. Dem Lenkradwinkel $\delta_S$ wird ein Motorwinkel $\delta_M$ nach der o. g. Gleichung 1 überlagert, so dass ein gewünschter Vorderradwinkel $\delta_{Fm}$ mit einem nicht zu großen Lenkradwinkel eingestellt werden kann. Dabei können durch eine geeignete Ansteuerung des Motors Zusammenhänge zwischen dem Lenkradwinkel und dem Lenkwinkel realisiert werden, die auch vom Fahrzustand, beispielsweise der Fahrzeuggeschwindigkeit oder dem Lenkradwinkel, abhängen können.

Nach der o. g. Gleichung 2 ist das Lenkradmoment $M_L$ von dem Reaktionsmoment $M_V$ an den lenkbaren Rädern abhängig. Hierdurch ergibt sich das schon erwähnte Problem, dass durch die Wahl eines konstanten Übersetzungsverhältnisses des Lenkgetriebes kein für alle Fahrzustände akzeptables Lenkradmoment bzw. Lenkgefühl erreicht werden kann. Insbesondere darf das Lenkradmoment $M_L$ bei großen Lenkwinkeln im Stand nicht zu groß werden, während es bei Fahrten mit hoher Geschwindigkeit nicht zu klein werden darf.

Aufgrund der dadurch bedingten Sicherheitsanforderungen an das Lenksystem, ist ein Sicherheitskonzept mit Sicherheits- und Diagnosefunktionen, insbesondere, um zufällige Fehler in der Sensoren 26, 28, dem Steuergerät 27 selbst oder der Aktuatorik zu entdecken und geeignet zu reagieren, d. h. beispielsweise die Nutzanwendungen 48, insbesondere die variable Lenkübersetzung geeignet zu schalten und/oder entsprechende Ersatzmodi zu starten, unerlässlich. Die Eingangssignale des Steuergeräts 27, insbesondere $\delta_S$ und die fahrzeugspezifischen Daten der Sensoren 26, werden auf Plausibilität geprüft. Beispielsweise wäre es nachteilig, ein falsches Geschwindigkeitssignal des Fahrzeugs zu akzeptieren, da die variable Lenkübersetzung geschwindigkeitsabhängig variiert wird.

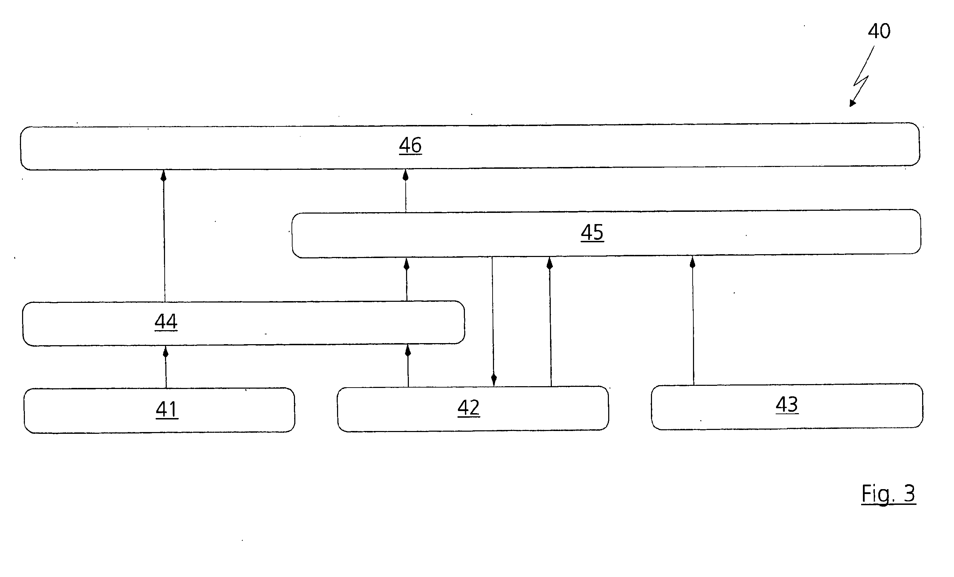

In Fig. 3 ist ein Sicherheitsüberwachungsverfahren 40 für das Lenksystem im Rahmen eines erfindungsgemäßen Verfahrens zum Betrieb eines Lenksystems schematisch dargestellt. Es ist in mehrere Schichten 41 bis 46 gegliedert und ist als Computerprogramm auf dem Steuergerät 27 realisiert. Dabei werden die Eingabedaten des Steuergeräts 27 mittels geeigneter Sicherheitsfunktionen fortlaufend auf Plausibilität geprüft. Anhand der Ergebnisse des Sicherheitsüberwachungsverfahrens 40 werden die Nutzanwendungen 48 des Lenksystems konfiguriert, d. h. der Stellantrieb 13, 23 zur Initiierung der Bewegung $\delta_M$ durch das Steuersignal u des Steuergeräts 27 entsprechend angesteuert.

Eine E/E/PES-Überwachungsschicht 41 dient der Überwachung des elektrisch / elektronischen / programmierbaren elektronischen Systems (E/E/PES) und führt Sicherheitsfunktionen, insbesondere zur Überwachung

- der Hardware, insbesondere des Steuergeräts 27, der Sensoren 26, 28 und der Aktuatoren des Lenksystems,
- der Plausibilität der im Rahmen der Eingabedaten des Steuergeräts 27 eingehenden Signale und
- des Programmablaufs auf dem Steuergerät 27,

aus.

Eine Anwendungsüberwachungsschicht 42 führt anwendungsbezogene Sicherheitsfunktionen, z. B. die Überwachung der Summe der Winkel des Lenksystems ($\delta_S$, $\delta_M$) aus.

Die Nutzanwendungen 48, die E/E/PES-Überwachungsschicht 41 und die Anwendungsüberwachungsschicht 42 werden teilweise redundant ausgeführt. Dementsprechend wird eine Vergleichsschicht 43 verwendet, welche die redundanten Ergebnisse der E/E/PES-Überwachungsschicht 41 und der Anwendungsüberwachungsschicht 42 abgleicht.

Wie aus Fig. 3 weiter ersichtlich, wird eine Signalschicht 44 verwendet, welche einen Signalstatus des Lenksystems bestimmt, wobei die Signalschicht 44 als Eingabe die Ergebnisse der E/E/PES-Überwachungsschicht 41 und der Anwendungsüberwachungsschicht 42 erhält. In einem weiteren Ausführungsbeispiel könnte die Signalschicht als sogenannte Symptomschicht auch die Ergebnisse der Vergleichsschicht 43 erhalten und in die Bestimmung des Signalstatus miteinbeziehen.

Eine Systemstatusschicht 45 bestimmt einen Systemstatus des Lenksystemstatus anhand der Ergebnisse der Signalschicht 44, der Vergleichsschicht 43 und der Anwendungsüberwachungsschicht 42.

Eine Anwendungskonfigurationsschicht 46 konfiguriert die Nutzanwendungen 48 aufgrund des durch die Systemstatusschicht 45 errechneten Systemstatus des Lenksystems und der Ergebnisse der Signalschicht 44, d. h. die Anwendungskonfigurationsschicht 46 schaltet die Nutzanwendungen 48, beispielsweise die variable Lenkübersetzung und startet falls erforderlich entsprechende Ersatzmodi.

In Fig. 4 ist eine schematische Darstellung des Zusammenhangs zwischen Sicherheitsfunktionen 47 des Sicherheitsüberwachungsverfahrens 40 und Nutzanwendungen 48 des erfindungsgemäßen Verfahrens zum Betrieb eines Lenksystems dargestellt. Dabei handelt es sich um eine Art Regelschleife, wobei die Sicherheitsfunktionen 47 als Eingabe einen Status sf-status des Sicherheitsüberwachungsverfahrens 40 und Informationen ds über den Fahrstatus des Kraftfahrzeugs, z. B. über die Sensoren 26, über ein Steuergerät eines ESP-Systems bzw. über einen CAN-Bus (nicht dargestellt), sowie Signale der Sensoren 28 (Lenkradwinkel $\delta_S$), erhalten. Als Ausgabe liefern die Sicherheitsfunktionen 47 den Status sf-status an das Sicherheitsüberwachungsverfahren 40 zurück. Dieses ermittelt daraufhin den Systemstatus des Lenksystems und bestimmt den Status af-status der Nutzanwendungen 48, mit dem die Nutzanwendungen 48 konfiguriert werden. An dieser Stelle sei noch angemerkt, dass die Nutzanwendungen 48 nur Daten als Eingabe von dem Sicherheitsüberwachungsverfahren 40 erhalten, jedoch keine an das Sicherheitsüberwachungsverfahren 40 zurückliefern. Die Ausgabe der Nutzanwendungen 48 ist das Steuersignal bzw. die Stellgröße u.

Eine vorteilhafte Ausführungsform ist in Fig. 5 dargestellt. Hier werden Sicherheitsfunktionen e/e/pes_sf(1, 2) der E/E/PES-Überwachungsschicht 41 und anwendungsbezogene Sicherheitsfunktionen app_sf(1, 2) der Anwendungsüberwachungsschicht 42 und die Nutzanwendungen 48(1, 2) redundant auf einem Zweiprozessorsystem µC1, µC2 des Steuergeräts 27 ausgeführt, was zusätzliche Sicherheit schafft. Die redundanten Ergebnisse der Sicherheitsfunktionen e/e/pes_sf(1, 2) und app_sf(1, 2) werden von der Vergleichsschicht 43 des Sicherheitsüberwachungsverfahren 40 überwacht (nicht dargestellt). In weiteren Ausführungsbeispielen können andere Rechnerkonfigurationen vorgesehen sein. Selbstverständlich kann die Redundanz durch verschiedenste Hardware- und/oder Softwarelösungen bzw. Algorithmen realisiert sein.

Bezugszeichen

| | |
|---|---|
| 11 | Lenkrad |
| 12 | Überlagerungsgetriebe |
| 13 | Stellantrieb |
| 14 | Lenkgetriebe |
| 15a | Räder |
| 15b | Räder |
| 16 | Lenkgestänge |
| 21 | Lenkrad |
| 22 | Überlagerungsgetriebe |
| 23 | Stellantrieb |
| 24 | Lenkgetriebe |
| 25 | Fahrzeugbewegungen |
| 26 | Sensoren |
| 27 | Steuergerät |
| 28 | Sensoren |
| 40 | Sicherheitsüberwachungsverfahren |
| 41 | E/E/PES-Überwachungsschicht |
| 42 | Anwendungsüberwachungsschicht |
| 43 | Vergleichsschicht |
| 44 | Signalschicht |
| 45 | Systemstatusschicht |
| 46 | Anwendungskonfigurationsschicht |
| 47 | Sicherheitsfunktionen |
| 48 | Nutzanwendungen |
| 101 | Verbindung |
| 102 | Verbindung |
| 103 | Verbindung |
| 104 | Verbindung |
| $\delta_S$ | Lenkradwinkel |
| $\delta_M$ | Motorwinkel |
| $\delta_G$ | überlagerte Bewegung |
| $\delta_{Fm}$ | Lenkwinkel |
| $i_ü$ | mech. Übersetzung des Überlagerungsgetriebes |
| $i_L$ | mech. Übersetzung des Lenkgetriebes |
| $M_V$ | Reaktionsmoment |
| $M_L$ | Lenkradmoment |
| e/e/pes_sf | hardwarenahe Sicherheitsfunktionen |
| app_sf | applikationsbezogene Sicherheitsfunktionen |
| sf-status | Status der Sicherheitsfunktionen |
| ds | Informationen über den Fahrstatus |

**Patentansprüche**

1. Verfahren zum Betrieb eines Lenksystems für ein Kraftfahrzeug mit wenigstens einem lenkbaren Rad (15), wobei eine durch den Fahrer des Kraftfahrzeugs initiierte Lenkbewegung ($\delta_S$) und/oder weitere fahrzeugspezifische Parameter als Eingabedaten von einem Steuergerät (27) empfangen werden und daraus ein Steuersignal (u) zur Erzeugung der Lenkbewegung des lenkbaren Rades ($\delta_{Fm}$), insbesondere zur Realisierung von Nutzanwendungen (48), ermittelt wird, **gekennzeichnet durch** ein Sicherheitsüberwachungsverfahren (40) des Lenksystems **durch** eine Überwachung der Eingabedaten des Steuergeräts (27) mittels Sicherheitsfunktionen (47), wobei das Sicherheitsüberwachungsverfahren (40) in mehrere Schichten (41 bis 46) gegliedert ist, welche die Eingabedaten des Steuergeräts (27) auf ihre Plausibilität überprüfen und anhand der Ergebnisse die Nutzanwendungen (48) des Lenksystems konfigurieren.

2. Verfahren nach Anspruch 1, **dadurch gekennzeichnet, dass** ein Stellantrieb (13;23) und ein Überlagerungsgetriebe (12;22) vorgesehen sind, wobei durch das Überlagerungsgetriebe (12;22) die durch den Fahrer des Fahrzeugs initiierte Lenkbewegung ($\delta_S$) und

die durch den Stellantrieb (13;23) initiierte Bewegung ($\delta_M$) zur Erzeugung der Lenkbewegung des lenkbaren Rades ($\delta_{Fm}$) zur Realisierung der Nutzanwendungen (48) überlagert werden, wobei der Stellantrieb (13;23) zur Initiierung der Bewegung ($\delta_M$) durch das Steuersignal (u) des Steuergeräts (27) angesteuert wird.

3. Verfahren nach Anspruch 1 oder 2,
**dadurch gekennzeichnet, dass**
eine Schicht als E/E/PES-Überwachungsschicht (41) ausgebildet ist, welche Sicherheitsfunktionen (e/e/pes_sf), insbesondere zur Überwachung

- der Hardware, insbesondere des Steuergeräts (27), der Sensoren (26,28) und der Aktuatoren des Lenksystems,
- der Plausibilität der im Rahmen der Eingabedaten des Steuergeräts (27) eingehenden Signale und
- des Programmablaufs auf dem Steuergerät (27),

ausführt.

4. Verfahren nach Anspruch 1, 2 oder 3,
**dadurch gekennzeichnet, dass**
eine Schicht als Anwendungsüberwachungsschicht (42) ausgebildet ist, welche anwendungsbezogene Sicherheitsfunktionen (app_sf) ausführt.

5. Verfahren nach Anspruch 4,
**dadurch gekennzeichnet, dass**
die Nutzanwendungen (48) und/oder die E/E/PES-Überwachungsschicht (41) und/oder die Anwendungsüberwachungsschicht (42) wenigstens teilweise redundant ausgeführt werden.

6. Verfahren nach Anspruch 5,
**dadurch gekennzeichnet, dass**
eine Schicht als Vergleichsschicht (43) ausgebildet ist, welche die redundanten Ergebnisse der E/E/PES-Überwachungsschicht (41) und der Anwendungsüberwachungsschicht (42) abgleicht.

7. Verfahren nach einem der Ansprüche 3 bis 6,
**dadurch gekennzeichnet, dass**
eine Schicht als Signalschicht (44) ausgebildet ist, welche einen Signalstatus des Lenksystems bestimmt, wobei die Signalschicht (44) als Eingabe die Ergebnisse der E/E/PES-Überwachungsschicht (41) und der Anwendungsüberwachungsschicht (42) erhält.

8. Verfahren nach Anspruch 7,
**dadurch gekennzeichnet, dass**
die Signalschicht (44) zusätzlich die Ergebnisse der Vergleichsschicht (43) erhält.

9. Verfahren nach Anspruch 7 oder 8,
**dadurch gekennzeichnet, dass**
eine Schicht als Systemstatusschicht (45) ausgebildet ist, welche einen Systemstatus des Lenksystems bestimmt, wobei die Systemstatusschicht (45) als Eingabe die Ergebnisse der Signalschicht (44), der Vergleichsschicht (43) und der Anwendungsüberwachungsschicht (42) erhält.

10. Verfahren nach Anspruch 9,
**dadurch gekennzeichnet, dass**
eine Schicht als Anwendungskonfigurationsschicht (46) verwendet wird, welche die Nutzanwendungen (48) aufgrund des durch die Systemstatusschicht (45) errechneten Systemstatus des Lenksystems und/oder der Ergebnisse der Signalschicht (44) bestimmt.

11. Computerprogramm mit Programmcodemitteln, um ein Verfahren gemäß einem der Ansprüche 1 bis 10 durchzuführen, wenn dass Programm auf einem Computer, insbesondere auf dem Steuergerät (27) des Lenksystems, ausgeführt wird.

12. Steuergerät (27) für ein Lenksystem zur Ausführung eines Computerprogramms gemäß Anspruch 11.

13. Steuergerät nach Anspruch 12,
**gekennzeichnet durch**
wenigstens teilweise redundante Hardware, insbesondere ein Mehrprozessorsystem ($\mu$C1, $\mu$C2), zur Ausführung der redundanten Programmcodemittel.

Fig. 1

EP 1 568 573 A1

Fig. 2

EP 1 568 573 A1

40

```
┌─────────────────────────────────────────────────────────────────────┐
│                              46                                        │
└─────────────────────────────────────────────────────────────────────┘
        ↕                    ↕
                 ┌──────────────────────────────────────────────────────┐
                 │                      45                                │
                 └──────────────────────────────────────────────────────┘
                        ↕      ↕    ↑                    ↑
┌───────────────────────────────────┐
│               44                  │
└───────────────────────────────────┘
        ↑                  ↑    ↓    ↑                    ↑
┌──────────────────┐   ┌──────────────────┐      ┌──────────────────┐
│       41         │   │       42         │      │       43         │
└──────────────────┘   └──────────────────┘      └──────────────────┘
```

Fig. 3

Fig. 4

Fig. 5

# EP 1 568 573 A1

**Europäisches Patentamt**

## EUROPÄISCHER RECHERCHENBERICHT

Nummer der Anmeldung

EP 05 00 1512

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 100 52 343 A1 (ROBERT BOSCH GMBH; ZF LENKSYSTEME GMBH) 11. Juli 2002 (2002-07-11) | 1,11-13 | B62D5/04 |
| Y | * Spalte 3 - Spalte 14 * * Abbildungen 1a-10 * ----- | 2-10 | |
| Y | WO 00/72100 A (ROBERT BOSCH GMBH; HOMMEL, MATHIAS; KRAEMER, WOLFGANG) 30. November 2000 (2000-11-30) * Seite 7 - Seite 17 * * Abbildungen 1-5 * ----- | 2-10 | |

| RECHERCHIERTE SACHGEBIETE (Int.Cl.7) |
|---|
| B62D G05B |

Der vorliegende Recherchenbericht wurde für alle Patentansprüche erstellt

| Recherchenort | Abschlußdatum der Recherche | Prüfer |
|---|---|---|
| München | 14. Juni 2005 | Billen, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**EP 1 568 573 A1**

**ANHANG ZUM EUROPÄISCHEN RECHERCHENBERICHT**
**ÜBER DIE EUROPÄISCHE PATENTANMELDUNG NR.**

EP 05 00 1512

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2005

| Im Recherchenbericht angeführtes Patentdokument | | Datum der Veröffentlichung | Mitglied(er) der Patentfamilie | | Datum der Veröffentlichung |
|---|---|---|---|---|---|
| DE 10052343 | A1 | 11-07-2002 | WO | 0232742 A1 | 25-04-2002 |
| | | | EP | 1332083 A1 | 06-08-2003 |
| | | | JP | 2004511395 T | 15-04-2004 |
| | | | US | 2003114969 A1 | 19-06-2003 |
| WO 0072100 | A | 30-11-2000 | DE | 10019152 A1 | 21-12-2000 |
| | | | WO | 0072100 A1 | 30-11-2000 |
| | | | DE | 50008126 D1 | 11-11-2004 |
| | | | EP | 1183579 A1 | 06-03-2002 |
| | | | JP | 2003500718 T | 07-01-2003 |
| | | | US | 6803736 B1 | 12-10-2004 |

EPO FORM P0461

Für nähere Einzelheiten zu diesem Anhang : siehe Amtsblatt des Europäischen Patentamts, Nr.12/82

13